# EUROPÄISCHE PATENTSCHRIFT

(11) **EP 0 910 889 B1**
(45) Veröffentlichungstag und Bekanntmachung des Hinweises auf die Patenterteilung: **19.08.2009**
(21) Anmeldenummer: 97946756.0
(22) Anmeldetag: 23.10.1997
(51) Int. Cl.: H02K 15/12, H02K 29/00

(54) **VERFAHREN ZUM ISOLIEREN DES STATORS EINES ELEKTRONISCH KOMMUTIERTEN GLEICHSTROMMOTORS**
PROCESS FOR INSULATING THE STATOR OF AN ELECTRONICALLY SWITCHED D.C. MOTOR
PROCEDE POUR ISOLER LE STATOR D'UN MOTEUR A COURANT CONTINU A COMMUTATION ELECTRONIQUE

(30) Priorität: 28.10.1996 DE 19644341
(43) Veröffentlichungstag der Anmeldung: 28.04.1999
(73) Patentinhaber: ebm-papst St. Georgen GmbH & Co. KG, 78112 St. Georgen (DE)
(72) Erfinder: ENGELBERGER, Reimund, D-78112 St. Georgen (DE); KIENINGER, Jürgen, D-78087 Mönchweiler (DE)
(74) Vertreter: Raible, Hans
(86) Internationale Anmeldenummer: PCT/EP1997/005852
(87) Internationale Veröffentlichungsnummer: WO 1998/019382

(56) Entgegenhaltungen:
- WO-A-96/31936
- DE-A- 3 123 814
- GB-A- 2 221 583
- PATENT ABSTRACTS OF JAPAN vol. 095, no. 006, 31.Juli 1995 & JP 07 075288 A (MATSUSHITA ELECTRIC IND CO LTD), 17.März 1995,
- PATENT ABSTRACTS OF JAPAN vol. 018, no. 167 (E-1528), 22.März 1994 & JP 05 336722 A (FUJI ELECTRIC CO LTD), 17.Dezember 1993,

## Beschreibung

Die Erfindung betrifft ein Verfahren zum Isolieren des Innenstators eines elektronisch kommutierten Gleichstrommotors, eine Vorrichtung zur Durchführung eines solchen Verfahrens, und einen Innenstator, der nach diesem Verfahren herstellbar ist.

Bei Elektromotoren, die in sog. Reinräumen, in feuchter oder aggressiver Umgebung eingesetzt werden, ist es erforderlich, die empfindlichen Teile des Motors, z. B. Wicklung und Leiterplatte, mit einer Schutzschicht zu versehen. So ist es z. B. aus der DE 37 37 050 A1 bekannt, den Stator eines Elektromotors mit Kunstharz zu umgießen. Die Aufgabe besteht bei dieser Veröffentlichung im Wesentlichen darin, die Herstellung der Verbindung zwischen der Statorwicklung und der Leiterplatte einfacher zu gestalten.

Die DE 31 23 814 A1 zeigt ein Ständerblechpaket eines elektronisch kommutierten Außenläufermotors, welches durch Umspritzen des mit Haupt- und Nebenpolen versehenen Ständerblechpakets mit einem Thermoplast in einem Spritzarbeitsgang komplett isoliert ist.

Die WO 96/31936 A1 beschreibt eine Vorrichtung zum Ausspritzen der durch Zusammenstellen eines Stapels von Statorblechen und Statorwicklungen geformten Zwischenstatorbaugruppe eines Innenläufermotors, wobei geschmolzener Kunststoff unter Druck in das Innere der Baugruppe eingespritzt wird. Diese Vorrichtung umfasst zwei axial verschiebbare Backen, welche an axialen Enden der Zwischenstatorbaugruppe derart angeordnet werden, dass die Baugruppe in ihrer radialen Ausdehnung frei bleibt. In der radialen Mitte der Zwischenstatorbaugruppe wird in der Form eine Welle angeordnet, um beim Einspritzen des Kunststoffs in das Innere der Zwischenstatorbaugruppe eine konzentrische Bohrung zur Aufnahme einer Rotorbaugruppe herzustellen, welch letztere anschließend in diese Bohrung eingebaut wird. Beim Einspritzen des geschmolzenen Kunststoffs wird dieser in innere Hohlräume zwischen den Polen der Zwischenstatorbaugruppe gepresst und füllt diese aus. Der geschmolzene Kunststoff bildet auch eine hintere Abschlusskappe für die Statorbaugruppe.

Ferner ist es bekannt, eine Pulverbeschichtung vorzunehmen. Die bekannten Verfahren erfordern nicht nur mechanische Nacharbeit, sondern sind auch nicht in der Lage, die Bedingungen höherer isolationsklassen, z. B. Schutzart DIN/VDE 0470 IP 54 zu erfüllen.

Aufgabe der Erfindung ist es, ein Verfahren zum Isolieren von Statoren bereit zu stellen, das auch extreme Isolations- und Schutzbedingungen für Elektromotoren erfüllt.

Diese Aufgabe wird gelöst durch die Merkmale des Anspruchs 1. Weitere Einzelheiten und vorteilhafte Weiterbildungen der Erfindung ergeben sich aus den im folgenden beschriebenen und in der Zeichnung dargestellten Ausführungsbeispielen.

### Es zeigen:

Fig. 1: einen Schnitt durch ein Spritzwerkzeug (schematisch);
Fig. 2: einen Schnitt entlang der Linie II-II der Fig. 1;
Fig. 3: einen Schnitt durch einen Stator ohne Isolationsumhüllung eines Lüfters entlang der Linie III-III in Fig. 4 ;
Fig. 4: eine Unteransicht eines Stators gemäß Fig. 3 ;
Fig. 5: einen Schnitt durch einen Stator nach einem Ausführungsbeispiel der Erfindung mit Isolationsumhüllung ;
Fig. 6: einen Schnitt durch einen in einem Lüfter montierten Stator mit Umhüllung ;

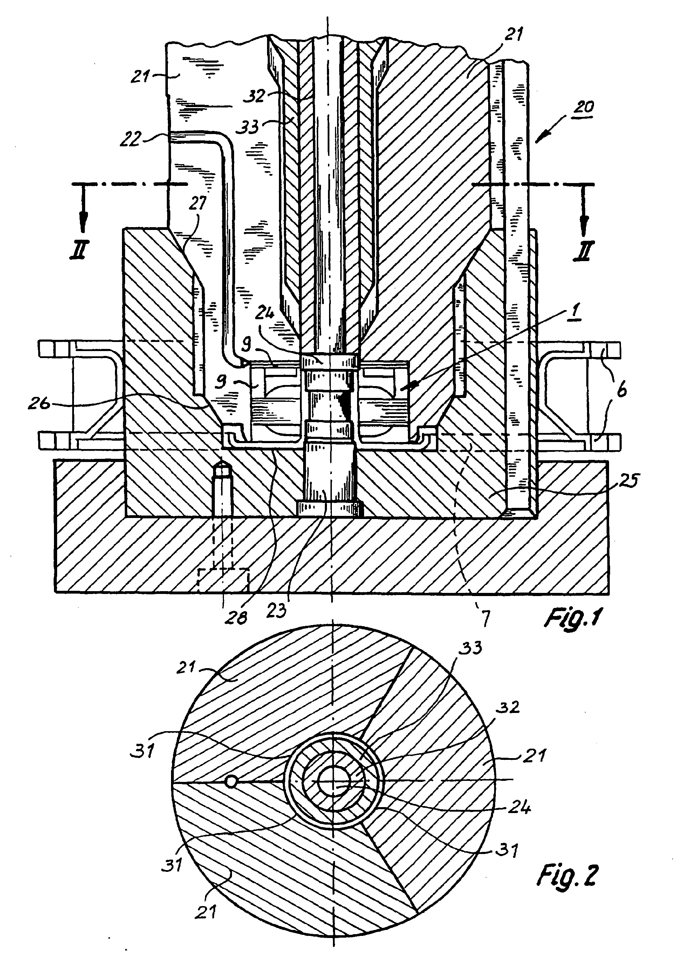

In Fig. 1 ist im Schnitt ein Spritzwerkzeug 20 zur Herstellung eines Stators 1 gemäß einem Ausführungsbeispiel der Erfindung schematisch dargestellt. Hier besteht die Spritzform beispielsweise aus drei seitlich ausfahrbaren Backen 21 , die um das Blechpaket 2 des Stators 1 herum angeordnet sind. Zwischen zwei der Backen 21 ist eine Zuführungsleitung 22 zum Einspritzen des Kunststoffs angeordnet. Die Zentrierung des Stators 1 wird einerseits mittels eines Zentrierdorns 23 , der konisch oder passgenau in den Lagersitz 3 des Lagertragrohrs 4 hineinragt, vorgenommen und andererseits mit einem Stößel 24 axial fixiert. Dadurch wird verhindert, daß beim Spritzvorgang Kunststoff in das Innere des Lagertragrohrs 4 gelangt . Die Einspritzung des hier verwendeten thermoplastischen Schmelzklebers erfolgt bei etwa 200°C.
Die Backen 21 liegen mit axialem Druck am Flansch 5 an und bewirkt so eine Abdichtung. Eine zusätzliche Abdichtung erhält man durch den Stößel 24 , der zusammen mit den geschlossenen Backen 21 einen Hohlraum definiert. So wird erreicht, daß außerhalb dieses Flanschs 5 kein Schmelzkleber injiziert wird.

Ein Aufnahmeteil 25 des Spritzwerkzeugs 20 enthält in einer Ausnehmung den Zentrierdorn 23 , konische Flächen 26,27 , die für die Führung der Backen 21 sorgen , und einen Boden 28 . Nicht dargestellte Schlitze erlauben das Einführen von Rippen 7 eines Lüftergehäuses 6 in das Aufnahmeteil 25. Das hier als Beispiel gezeigte Lüftergehäuse 6 besteht aus Lagertragrohr 4 und Flansch 5 und ist einstückig als Kunststoffteil ausgeführt.

Nach Einlegen des Stators 1 , der am Boden 28 der Ausnehmung des Aufnahmeteils 25 aufliegt , werden die Backen 21 und der Stößel 24 bis an einen Anschlag bewegt und bilden eine Form , die den Stator mit geringem Abstand umschließt. Anschließend wird der Kunststoff unter Druck über die Zuführungsleitung 22 in die oben beschriebene

Form eingespritzt und so entsteht eine Umhüllung bzw. Isolationsschicht 9 (schraffiert dargestellt). Der magnetische Luftspalt 8 zwischen Rotor und Stator ist mittels Doppelpfeilen dargestellt Dabei wird zum Isolieren des Stators 1 des Außenläufermotors die dem magnetischen Luftspalt 8 zugewandte Seite des Stators 1 mit einem Abstand von der Form umschlossen, der kleiner ist als der im Betrieb vorhandene Luftspalt dieses Motors Nach einer kurzen Pause, die durch zusätzliches Kühlen der Form noch verkürzt werden kann, wird die Form geöffnet und der umspritzte Stator 1 wird entnommen. Durch mindestens drei seitlich (im wesentlichen in radialer Richtung) ausfahrbare Backen 21 wird die Entformung wesentlich erleichtert.

Als Schmelzkleber für die Umhüllung 9 kommen vor allem folgende Stoffe in Frage :
Polyamide; Co-Polyamide; Co-Polyester, Hoch- oder Niederdruck-Polyethylene;
Ethylenvinylacetate; Polyester; Ethylen-Acrylsäure-Acrylsäureester (EAA) ;
Terpolyamide; Ethylen-Vinylacetat-Acrylsäure-Terpolymere.

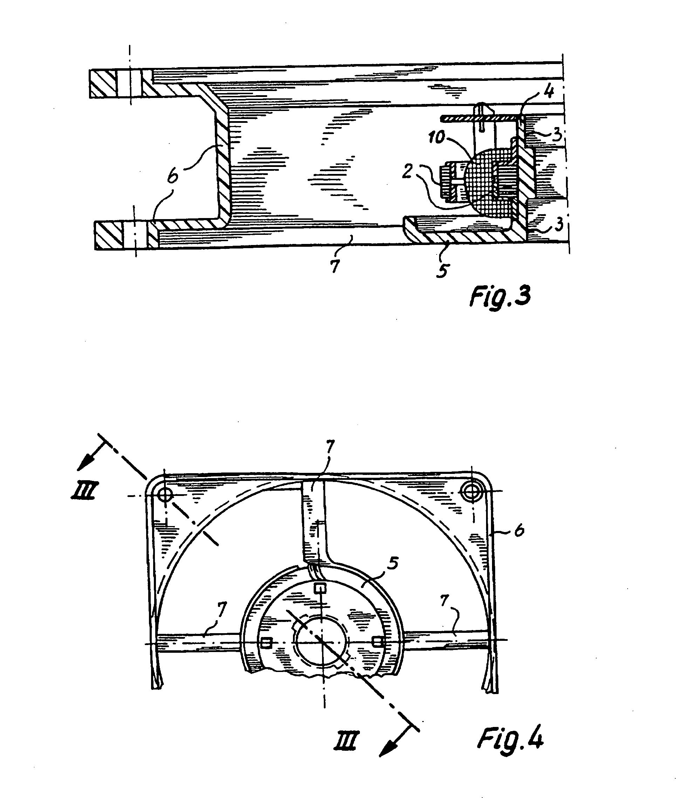

Je nach Anforderungen, die für den Verwendungsfall bestehen, wird der geeignete Kunststoff ermittelt. So wurde für das in Fig. 3 bis 6 dargestellte Ausführungsbeispiel (für die Isolationsschicht 9 des Stators 1 eines elektronisch kommutierten Gleichstrommotors in einem Lüfter) ein thermoplastischer Schmelzklebstoff auf Polyamid-Basis verwendet mit der Bezeichnung MACROMELT 6790 der Firma Henkel.

Dieser Kunststoff kann mit relativ geringem Druck eingespritzt werden und haftet gut an den verschiedenen Werkstoffen, aus denen der Stator 1 besteht. Die Erfüllung dieser Bedingungen ist erforderlich, da es sich um einen elektronisch kommutierten Gleichstrommotor handelt. Dieser bekannte Motor wird nur soweit beschrieben wie es für das Verständnis dieser Erfindung erforderlich ist. Der Stator 1 besteht im wesentlichen aus einem Blechpaket 2, einer Wicklung 10 und einer Leiterplatte 11 und ist am Außenumfang des Lagertragrohrs 4 befestigt. Auf der Leiterplatte 11 befinden sich lageempfindliche elektronische Bauelemente, die durch einen zu hohen Einspritzdruck verschoben würden und so den Motor unbrauchbar machen würden. Außerdem muß der Kunststoff für die Ummantelung der Leiterplatte (11) so flexibel sein, daß z. B. SMD-Bauelemente nicht abgesprengt werden.

In Fig. 2 sind die drei Backen 21 des Werkzeugs 20 im Schnitt in geschlossener Stellung dargestellt, wobei die innere Ausnehmung 31 der Backen 21 den Außendurchmesser der Umhüllung des Stators 1 begrenzt. Der Schaft des Stößels 24 wird von einer Schutzhülse 32 und diese von einer Führungshülse 33 umgeben. Die Führungshülse 33 bildet den radialen Anschlag für die Backen 21.

In Fig. 3 und 4 ist ein Lüftergehäuse 6 mit einem Flansch 5, Rippen 7 und einem Lagertragrohr 4 dargestellt. Ein Stator 1 eines elektronisch kommutierten Gleichstrommotors ist auch dem Außenumfang des Lagertragrohrs 4 wie oben beschrieben angeordnet. Diese Abbildungen, die den Zustand des Stators 1 vor dem Umspritzen deutlich zeigen, sollen zum besseren Verständnis dieser Erfindung beitragen.

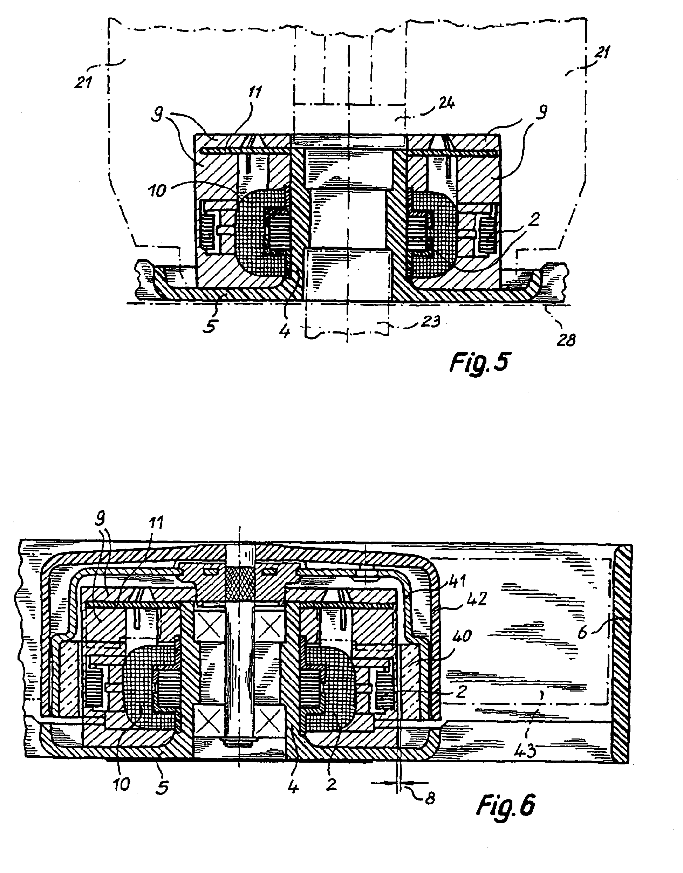

Die Fig. 5 zeigt den Stator 1 nach der Erfindung. Die Konturen der wesentlichen Teile des Spritzwerkzeuges 20 wurden mit Strichpunkt-Linien eingezeichnet. Zur Verdeutlichung wurde eine vergrößerte Darstellung des Stators gewählt. Darin sind die verschiedenen Bereiche der Umspritzung 9 erkennbar, wie z. B. die sehr dünne Schicht um das Blechpaket 2 herum. Erst durch die Verfahrensschritte dieser Erfindung und die Werkstoffauswahl wurde diese Umspritzung möglich.

In Fig. 6 ist der Schnitt durch einen fertig montierten Lüfter mit einem Stator 1 gemäß einem Ausführungsbeispiel der Erfindung dargestellt. Der Stator 1 und seine Teile sind bereits oben beschrieben worden. Der Rotor dieses Motors besteht im wesentlichen aus Rotormagnet 40, Rotorglocke 41 und Lüfternabe 42 mit Lüfterflügeln 43 (Strichpunktlinien). Durch die Erfindung ist es gelungen, trotz der Umhüllung 9 auch um das Blechpaket 2, bei einem Serienprodukt, ohne dieses zu verändern, noch einen Luftspalt 8 zu erhalten, der den
Betrieb des Motors ohne mechanische Nacharbeit am Umfang des Stators 1 ermöglicht.

## Patentansprüche

1. Verfahren zum Isolieren des eine Leiterplatte (11) tragende Innenstators (1) eines elektronisch kommutierten Außenläufer-Gleichstrommotors, welcher Innenstator (1) dazu ausgebildet ist, mit einem Außenrotor (40, 41, 42) zusammenzuwirken, der relativ zum Innenstator (1) um eine Drehachse drehbar und vom Innenstator durch einen magnetischen Luftspalt (8) getrennt ist, welches Verfahren folgende Schritte aufweist:
a) Der Innenstator (1) wird in eine verschließbare Form (20) mit seitlich im wesentlichen in radialer Richtung ausfahrbaren Backen (21) eingebracht;
b) die Form (20) wird geschlossen, wobei sie die Außenkonturen des Innenstators (1) einschließlich der Leiterplatte (11) mindestens bereichsweise im Bereich der dem magnetischen Luftspalt (8) zugewandten Seite des Innenstators (1) mit Abstand umschließt;
c) in die Form (20) wird ein thermoplastischer Schmelzkleber (9) unter Druck eingespritzt;
d) die Form (20) wird geöffnet, und der umspritzte Innenstator (1) wird entnommen.

2. Verfahren nach Anspruch 1, bei welchem zwischen den Schritten c) und d) eine Pause eingeschaltet wird, um das Erstarren des thermoplastischen Schmelzklebers (9) in der Form (20) zu ermöglichen.

3. Verfahren nach Anspruch 1 oder 2, bei welchem die verschließbare Form (20) gekühlt wird.

4. Verfahren nach einem oder mehreren der vorhergehenden Ansprüche, bei welchem die dem magnetischen Luftspalt (8) zugewandte Seite des Innenstators (1) mit einem Abstand von der Form (20) umschlossen wird, welche kleiner ist als der im Betrieb vorhandene magnetische Luftspalt (8) des Motors.

5. Verfahren nach einem oder mehreren der Ansprüche 1 bis 4, bei welchem der Innenstator (1) auf einem Trägerglied (5) angeordnet ist, insbesondere auf dem Flansch eines Lüftergehäuses (6), und durch Teile (21) der verschließbaren Form (20) im Zusammenwirken mit diesem Trägerglied (5) ein Hohlraum (12) gebildet wird, in welchen der thermoplastische Schmelzkleber injiziert wird.

6. Verfahren nach Anspruch 5, bei welchem das Trägerglied (5) ungefähr senkrecht zur genannten Drehachse verläuft, und Teile der verschließbaren Form (20) zur Bildung des Hohlraums (12) im Wesentlichen senkrecht gegen dieses Trägerglied (5) angepresst werden.

7. Vorrichtung zur Durchführung des Verfahrens nach einem oder mehreren der vorhergehenden Ansprüche, mit einer verschließbaren Form (20), welche bewegliche Backen (21) aufweist, die seitlich im wesentlichen in radialer Richtung verschiebbar und dazu ausgebildet sind, die Außenkonturen des Innenstators (1) eines elektronisch kommutierten Außenläufermotors einschließlich einer zugeordneten Leiterplatte (11) mindestens bereichsweise im Bereich der dem magnetischen Luftspalt (8) zugewandten Seite des Innenstators (1) mit Abstand zu umschließen.

8. Vorrichtung nach Anspruch 7, welche zum Eingriff in und zum Verschließen eines am Stator (1) vorgesehenen Lagertragrohrs (4) eine Aufnahme mit einem Zentrierdorn (23) und einem Stößel (24), aufweist, um eine Beschichtung der Innenseite dieses Lagertragrohrs (4) zu verhindern.

9. Innenstator (1) für einen elektronisch kommutierten Außenläufer-Gleichstrommotor, welcher Innenstator auf seiner dem magnetischen Luftspalt (8) zugewandten Seite eine durch Einspritzung von thermoplastischem Schmelzkleber zwischen dieser Seite und einer ihr gegenüber liegenden Spritzform entstandene Isolationsschicht (9) aufweist, deren Dicke kleiner ist als die Dicke des im Betrieb vorhandenen magnetischen Luftspalts (8).

10. Innenstator nach Anspruch 9, bei welchem sich die Isolationsschlicht (9) von der dem magnetischen Luftspalt (8) zugewandten Seite des Innenstators (1) über die Wicklung (10) bis zu einem am Innenstator vorgesehenen Lagertragrohr (4) erstreckt.

11. Innenstator nach einem oder mehreren der Ansprüche 9 bis 10, bei welchem sich die Isolationsschicht (9) nicht in das Innere des Lagertragrohrs (4) erstreckt.

## Claims

1. Method for insulating the internal stator (1), bearing a printed circuit board (11), of an electronically commutated direct-current external-rotor motor, which internal stator
(1) is formed to co-operate with an external rotor (40, 41, 42) which can rotate relative to the internal stator (1) about an axis of rotation and is separated from the internal stator by a magnetic air gap (8), which method comprises the following steps:
a) The internal stator (1) is placed in a closable mould (20) with jaws (21) which can be moved out laterally substantially in the radial direction;
b) the mould (20) is closed, wherein it surrounds the outer contours of the internal stator (1), including the printed circuit board (11), with a spacing at least in some areas in the area of the side of the internal stator (1) which faces the magnetic air gap (8);
c) a thermoplastic hot-melt adhesive (9) is injected under pressure into the mould (20);
d) the mould (20) is opened, and the coated internal stator (1) is removed.

2. Method according to Claim 1, in which a pause is introduced between the steps c) and d) in order to enable the thermoplastic hot-melt adhesive (9) to set in the mould (20).

3. Method according to Claim 1 or 2, in which the closable mould (20) is cooled.

4. Method according to one or more of the preceding Claims, in which the side of the internal stator (1) which faces the magnetic air gap (8) is surrounded by the mould (20) with a spacing which is smaller than the magnetic air gap (8) of the motor existing during operation.

5. Method according to one or more of Claims 1 to 4, in which the internal stator (1) is disposed on a supporting member (5), in particular on the flange of a fan housing (6),
and a cavity (12) is formed by parts (21) of the closable mould (20) in co-operation with this supporting member (5), into which cavity the thermoplastic hot-melt adhesive is injected.

6. Method according to Claim 5, in which the supporting member (5) extends approximately perpendicularly to the above-mentioned axis of rotation, and parts of the closable mould (20) are pressed substantially perpendicularly against this supporting member (5) in order to form the cavity (12).

7. Device for carrying out the method according to one or more of the preceding Claims, with a closable mould (20) which comprises mobile jaws (21) which can be displaced laterally substantially in the radial direction and are formed to surround the outer contours of the internal stator (1) of an electronically commutated external-rotor motor, including an associated printed circuit board (11), with a spacing at least in some areas in the area of the side of the internal stator (1) which faces the magnetic air gap (8).

8. Device according to Claim 7, which comprises a receptacle with a centring mandrel (23) and a ram (24) for engaging in and for closing a bearing support tube (4) provided on the stator (1) in order to prevent the inside of this bearing support tube (4) from being coated.

9. Internal stator (1) for an electronically commutated direct-current external-rotor motor, which internal stator comprises on its side which faces the magnetic air gap (8) an insulating layer (9) which is obtained by injecting thermoplastic hot-melt adhesive between this side and an injection mould lying opposite it and the thickness of which is smaller than the thickness of the magnetic air gap (8) existing during operation.

10. Internal stator according to Claim 9, in which the insulating layer (9) extends from the side of the internal stator (1) which faces the magnetic air gap (8) over the winding (10) up to a bearing support tube (4) provided on the internal stator.

11. Internal stator according to one or more of Claims 9 to 10, in which the insulating layer (9) does not extend into the interior of the bearing support tube (4).

## Revendications

1. Procédé pour isoler le stator intérieur (1) portant une carte de circuit imprimé (11) d'un moteur à courant continu à enduit extérieur et commutation électronique, lequel stator intérieur (1) est conçu pour collaborer avec un rotor extérieur (40, 41, 42) qui peut tourner par rapport au stator intérieur (1) autour d'un axe de rotation et qui est séparé du stator intérieur par un entrefer magnétique (8), lequel procédé présente les étapes suivantes :
a) le stator intérieur (1) est introduit dans un moule refermable (20) comportant des mâchoires (21) déplaçables latéralement essentiellement en direction radiale ;
b) le moule (20) est fermé, à l'occasion de quoi il entoure à distance les contours extérieurs du stator intérieur (1) y compris de la carte de circuit imprimé (11) au moins par endroits dans la région du côté du stator intérieur (1) tourné vers l'entrefer magnétique (8) ;
c) une colle fusible thermoplastique (9) est injectée sous pression dans le moule (20) ;
d) le moule (20) est ouvert et le stator intérieur (1) surmoulé est prélevé.

2. Procédé selon la revendication 1, dans lequel une pause est intercalée entre les étapes c) et d) pour permettre la solidification de la colle fusible thermoplastique (9) dans le moule (20).

3. Procédé selon la revendication 1 ou 2, dans lequel le moule refermable (20) est refroidi.

4. Procédé selon l'une ou plusieurs des revendications précédentes, dans lequel le côté du stator intérieur (1) tourné vers l'entrefer magnétique (8) est entouré par le moule (20) à une distance qui est plus petite que l'entrefer magnétique (8) du moteur existant en fonctionnement.

5. Procédé selon l'une ou plusieurs des revendications 1 à 4, dans lequel le stator intérieur (1) est disposé sur un élément de support (5), en particulier sur la bride d'un carter de ventilateur (6), et il est formé, par des parties (21) du moule refermable (20) coopérant avec cet élément de support (5), un espace vide (12) dans lequel la colle fusible thermoplastique est injectée.

6. Procédé selon la revendication 5, dans lequel l'élément de support (5) s'étend à peu près perpendiculairement à l'axe de rotation mentionné, et des parties du moule refermable (20) sont pressées essentiellement perpendiculairement contre cet élément de support (5) pour former l'espace vide (12).

7. Dispositif pour réaliser le procédé selon l'une ou plusieurs des revendications précédentes, avec un moule refermable (20) qui présente des mâchoires (21) mobiles qui sont déplaçables latéralement essentiellement en direction radiale et conçues pour entourer à distance les contours extérieurs du stator intérieur (1) d'un moteur à enduit extérieur et commutation électronique, y compris d'une carte de circuit imprimé (11) associée, au moins par endroits dans la région du côté du stator intérieur (1) tourné vers l'entrefer magnétique (8).

8. Dispositif selon la revendication 7, lequel présente, pour l'engagement dans et pour l'obturation d'un tube support de palier (4) prévu sur le stator (1), un logement avec un mandrin de centrage (23) et un poussoir (24) pour empêcher une enduction du côté intérieur de ce tube support de palier (4).

9. Stator intérieur (1) pour un moteur à courant continu à enduit extérieur et commutation électronique, lequel stator intérieur présente sur son côté tourné vers l'entrefer magnétique (8) une couche isolante (9) réalisée par injection de colle fusible thermoplastique entre ce côté et un moule d'injection situé en face de lui, dont l'épaisseur est plus petite que l'épaisseur de l'entrefer magnétique (8) existant en fonctionnement.

10. Stator intérieur selon la revendication 9, dans lequel la couche isolante (9) s'étend du côté du stator intérieur (1) tourné vers l'entrefer magnétique (8) jusqu'à un tube support de palier (4) prévu sur le stator intérieur en passant par l'enroulement (10).

11. Stator intérieur selon l'une ou plusieurs des revendications 9 à 10, dans lequel la couche isolante (9) ne s'étend pas à l'intérieur du tube support de palier (4).
